**Europäisches Patentamt**

**European Patent Office**

**Office européen des brevets**

(19)

(11) Veröffentlichungsnummer: **0 200 793**
**A1**

(12) ## EUROPÄISCHE PATENTANMELDUNG

(21) Anmeldenummer: **85104106.1**

(51) Int. Cl.⁴: **F 16 C 11/04**

(22) Anmeldetag: **04.04.85**

(43) Veröffentlichungstag der Anmeldung: **12.11.86**
**Patentblatt 86/46**

(71) Anmelder: **Ignaz Vogel GmbH & Co KG, Fahrzeugsitze, Kleinsteinbacher Strasse 42-44, D-7500 Karlsruhe 41-Stu (DE)**

(72) Erfinder: **Vogel, Ignaz, Dipl.-Ing., Kleinsteinbacher Strasse 44, D-7500 Karlsruhe 41-Stu (DE)**

(84) Benannte Vertragsstaaten: **AT BE CH DE FR GB IT LI NL SE**

(74) Vertreter: **Trappenberg, Hans, Wendtstrasse 1, D-7500 Karlsruhe 21 (DE)**

(54) **Drehgelenk.**

(57) Die gelenkige Verbindung zweier in einer Ebene gegenseitig verschwenkbaren Konstruktionsteile erfolgt im allgemeinen über einen Gelenkbolzen, der mit einer Buchse in das starre Konstruktionsteil eingeschraubt ist, wobei sich das verschwenkbare Konstruktionsteil mit einem Auge auf der Buchse verschwenkt. Diese einfache Gelenkverbindung kann nur mit sehr großem Aufwand spiel- und klapperfrei ausgeführt werden.

Um diese Klapperfreiheit über die gesamte Standzeit der Gelenkverbindung, wie auch um eine gute gegenseitige Führung der Konstruktionsteile zu erreichen, wird nach der Erfindung vorgeschlagen, daß die bei derartigen Gelenkverbindungen vorgesehene Buchse aus einer inneren Distanzbuchse (1) und einer darauf angeordneten Elastomerbuchse (7) zusammengefügt ist, wobei die Elastomerbuchse (7) länger als die Distanzbuchse (1) ausgeführt und beim Zusammenbau, das Spiel in der Gelenkverbindung ausgleichend, zusammengedrückt wird.

EP 0 200 793 A1

01.04.1985 n33
VV 0221

IGNAZ VOGEL GmbH & Co. KG., Fahrzeugsitze
Kleinsteinbacher Straße 42-44, 7500 Karlsruhe 41-Stu

Drehgelenk

Die Erfindung betrifft ein Drehgelenk zum drehbeweglichen
Verbinden zweier Konstruktionsteile über einen bestimmten
Verschwenkweg, gebildet aus einem starren und einem über
einen Gelenkbolzen drehbar daran befestigten Konstruktionsteil, wobei zwischen dem im starren Konstruktionsteil befestigten Gelenkbolzen und dem verdrehbaren Konstruktionsteil eine Buchse eingefügt ist.

Eine derartige Verbindung zweier Konstruktions- beziehungsweise Maschinenteile läßt zwar nur eine gegenseitige ebene
Bewegung zu, jedoch betrifft diese Verbindung den Hauptteil
aller gelenkigen Verbindungen. Außerdem soll die Verbindung
lediglich eine Verschwenkbewegung der beiden Konstruktionsteile relativ zueinander zulassen, wobei der Verschwenkbereich allerdings durchaus auch in Sonderfällen einige Um-

drehungen betragen kann. Auch sollen durch diese Drehgelenke insbesondere Zug- und Druckkräfte gegenseitig auf die
Konstruktionsteile übertragen werden können; die Belastung
durch die Verschwenkung der beiden Teile ist verhältnismäßig gering.

Um den Gelenkbolzen eindeutig in dem starren Konstruktionsteil festlegen zu können, ist im allgemeinen eine Distanzbuchse vorgesehen, die den Druck des Kopfes des Gelenkbolzens auf das starre Konstruktionsteil überträgt, womit eine
einwandfreie Verspannung des Gelenkbolzens im starren Konstruktionsteil möglich ist. Auf dieser Distanzbuches gleitet dann drehbeweglich das verschwenkbare Konstruktionsteil.

Bei vielen dieser Gelenke besteht die Forderung, daß sie
ein möglichst geringes Spiel aufweisen sollen, nicht nur um
die beiden Teile exakt zueinander zu führen, sondern um
eine Klapperfreiheit des Gelenkes zu erzielen. Dies ist
beispielsweise stets eine Forderung an Gelenke, die in Fahrzeugen angebrachte Konstruktionsteile miteinander verbinden, beispielsweise die gelenkige Verbindung des Sitzes
eines Fahrgastsitzes mit dessen Rückenlehne. Vorausgesetzt
kann noch werden, daß derartige Drehgelenk-Verbindungen
über die gesamte Standzeit der Konstruktionsteile ihre ursprüngliche Funktion beibehalten sollen, also sowohl die
einwandfreie gegenseitige Führung der Konstruktionsteile,
wie auch die Klapperfreiheit.

Mit einem Drehgelenk, wie dies oben beschrieben ist, wo
also das verschwenkbare Konstruktionsteil lediglich mit
einem Auge auf einer Distanzbuchse beziehungsweise dem Drehgelenkbolzen geführt wird, ist nur mit sehr großem Aufwand
eine exakte Führung, die angestrebte Klapperfreiheit sowie
auch die lange Standzeit zu erreichen. Eine Verbesserung
wird bei derartigen Gelenken dadurch erzielt, daß ein- oder beidseitig ein konusförmiger Teil in das verschwenkbare Konstruktionsteil eingreift, wodurch eventuell vorhandenes Spiel, durch Nachstellen des Konus´, eliminiert werden kann. Soll diese Spielfreiheit jedoch über die gesamte Standzeit des Gelenkes gewährleistet sein, muß wiederum durch verhältnismäßig großen Aufwand dafür gesorgt werden, daß stets der Konus entsprechend nachgespannt wird.

Aufgabe der Erfindung ist es, ein derartiges ebenes Drehgelenk anzugeben, das die oben genannten Aufgaben erfüllt, also Zug und Druck übertragen kann, die miteinander verbundenen Konstruktionsteile gegenseitig führt, klapperfrei ist und eine große Standzeit, die mit der Standzeit der Konstruktionsteile übereinstimmt, aufweist.

Erreicht wird dies nach der Erfindung dadurch, daß die Buchse aus einer inneren Distanzbuchse und einer darauf angeordneten Elastomerbuchse zusammengefügt ist, wobei die Elastomerbuchse in nicht eingebautem Zustand länger als die Distanzbuchse und im Einbauzustand, das Spiel in der Gelenkverbindung aussgleichend, auf deren Länge zusammendrückbar ist.

Nicht mehr also wie bei der bekannten Gelenkverbindung wird das verschwenkbare Konstruktionsteil direkt mit einem Auge auf der Distanzbuchse geführt, sondern es ist eine Elastomerbuchse dazwischengefügt, die bei der Montage der Gelenkverbindung so zusammengedrückt wird, daß sämtliches Spiel innerhalb der Gelenkverbindung ausgeglichen wird. Dies ist durch die Verwendung der modernen Elastomere, insbesondere auf Polyurethanbasis, durchaus möglich, da derartige Kunststoffe außerordentlich abriebfest und einreißfest sind. Die Drehung des verschwenkbaren Konstruktionsteiles erfolgt hierbei auf der Außenfläche der Elastomerbuchse, die zur Erleichterung des Verschwenkens mit einer Flüssigkeit, vorzugsweise mit Öl, benetzt werden kann.

Tatsächlich hat sich in der Praxis gezeigt, daß derartige
Drehgelenke nicht nur einwandfrei die beiden Konstruktionsteile gegenseitig führen, sondern daß sie auch über ihre
gesamte Standzeit, die im allgemeinen höher ist als diejenige der verwendeten Konstruktionsteile, klapperfrei ist.
Hervorzuheben ist außerdem der geringe Aufwand für dieses
erfindungsgemäße Drehgelenk, so daß dessen Einsatz auch in
geringwertigeren Konstruktionen auf wirtschaftliche Art und
Weise möglich ist.

Um auch eine einwandfreie seitliche Führung der Konstruktionsteile zu erreichen, wird nach der Erfindung vorgeschlagen, daß beidseitig aus Elastomer bestehende Unterlagscheiben auf die Elastomerbuchse aufgeschoben sind. Möglich ist
es auch, die Elastomerbuchse wie auch die Distanzbuchse mit
einem seitlichen scheibenförmigen Kragen zu versehen.

Damit ergibt sich auch eine besonders bevorzugte Ausführung, bei der die Elastomerbuchse deutlich länger als die
Distanzbuchse ausgeführt wird, so daß der überstehende Teil
der Elastomerbuchse in den Zwischenraum zwischen dem scheibenförmigen Kragen der Distanzbuchse und dem verschwenkbaren Konstruktionsteil gedrückt wird, dieses Konstruktionsteil also an der Anlenkstelle vollkommen umgibt. Dadurch
ist nicht nur die zusätzliche Verwendung von aus Elastomer
bestehenden Unterlagscheiben hinfällig, sondern auch eine
einwandfreie umfassende Führung des verschwenkbaren Konstruktionsteiles, die mit Sicherheit klapperfrei ist, gegeben. Um das Zwischendrücken des Endteiles der Elastomerbuchse zwischen den scheibenförmigen Kragen der Distanzbuchse und dem verschwenkbaren Konstruktionsteil zu erleichtern, wird nach der Erfindung vorgeschlagen, daß der zylindrische Buchsenteil der Distanzbuchse über einen rampenförmigen Bund in den scheibenförmigen Kragen übergeht, wobei der
rampenförmige Bund auch rund ausgekehlt sein kann.

Auf der Zeichnung ist ein Ausführungsbeispiel des Erfindungsgegenstandes schematisch dargestellt, und zeigen:

Fig. 1   eine Distanzbuchse,

Fig. 2   eine Elastomerbuchse und

Fig. 3   ein zusammengesetztes Drehgelenk.

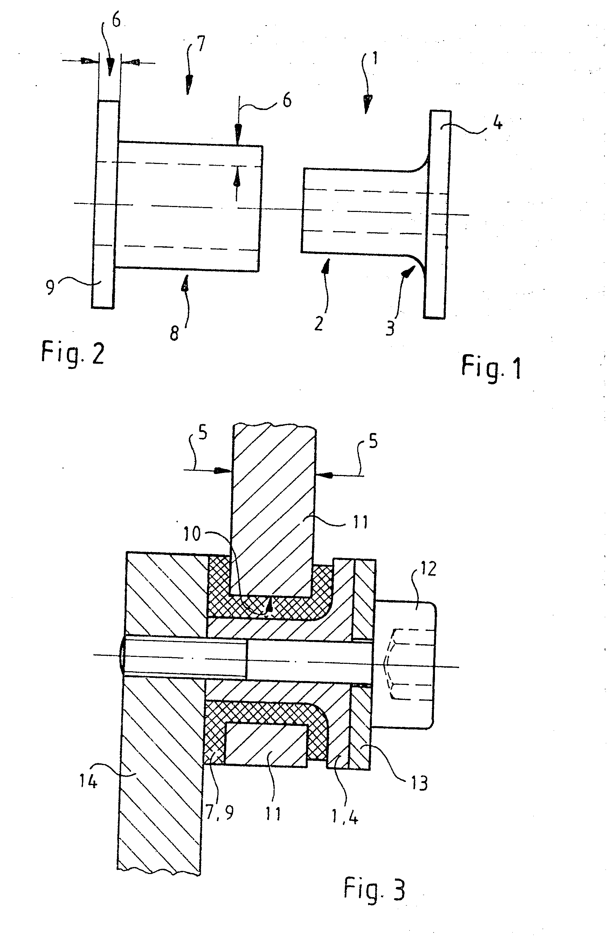

Die Distanzbuchse 1 nach Fig. 1 weist einen zylindrischen Teil 2 auf, der über eine Auskehlung 3 in einen scheibenförmigen Kragen 4 übergeht. Die Länge dieses zylindrischen Teiles 2 bis zum scheibenförmigen Kragen 4 entspricht der Dicke 5 eines verschwenkbaren Konstruktionsteiles (Fig. 3) zuzüglich der doppelten Stärke 6 einer Elastomerbuchse 7.

Die Elastomerbuchse 7 (Fig. 2) weist ebenfalls einen zylindrischen Teil 8 auf mit einem endständigen scheibenförmigen Kragen 9. Ihr Innendurchmesser entspricht dem Außendurchmesser der Distanzbuchse 1, ihr Außendurchmesser dem Innendurchmesser des Auges 10 eines verschwenkbaren Konstruktionsteiles 11.

In Fig. 3 ist der Zusammenbau dieser Teile gezeigt. In das Auge 10 des verschwenkbaren Konstruktionsteiles 11 ist die außenflächig mit Öl benetzte Elastomerbuchse 7 eingeschoben und in diese die Distanzbuchse 1. Sodann wird durch Einfügen eines Gelenkbolzens (Schraube 12) unter Zwischenlage einer Unterlagscheibe 13 in ein starres Konstruktionsteil 14 die Distanzbuchse 1 an dieses starre Konstruktionsteil 14 angedrückt, wobei sich die Endteile der Elastomerbuchse 7 in den Zwischenraum zwischen dem scheibenförmigen Kragen 4 der Distanzbuchse und den verschwenkbaren Konstruktionsteil 11 hineindrücken. Dadurch wird dieses verschwenkbare Konstruktionsteil 11 vollkommen umfaßt und geführt. Die Verschwenkbewegung des verschwenkbaren Konstruktionsteiles 11 gegenüber dem starren Konstruktionsteil 14 erfolgt auf der Elastomerbuchse 7.

Hervorzuheben ist, daß das Auge 10 des verschwenkbaren Konstruktionsteiles 11 keiner besonderen Bearbeitung bedarf, sondern daß eine einfache Bohrung ohne besondere Oberflächenbehandlung für den vorgesehenen Verwendungszweck genügt.

HANS TRAPPENBERG · PATENTINGENIEUR · KARLSRUHE
EUROPÄISCHER PATENTVERTRETER

01.04.1985 n33
VV 0221

IGNAZ VOGEL GmbH & Co. KG, Fahrzeugsitze
Kleinsteinbacher Str. 42-44, 7500 Karlsruhe 41-Stu

P A T E N T A N S P R Ü C H E

1.  Drehgelenk zum drehbeweglichen Verbinden zweier Konstruktionsteile über einen bestimmten Verschwenkbereich,
gebildet aus einem starren und einem über einen Gelenkbolzen drehbar daran befestigten Konstruktionsteil, wobei
zwischen dem im starren Konstruktionsteil befestigten Gelenkbolzen und dem verdrehbaren Konstruktionsteil eine
Buchse eingefügt ist,
dadurch gekennzeichnet,
daß die Buchse aus einer inneren Distanzbuchse (1) und
einer darauf angeordneten Elastomerbuchse (7) zusammengefügt ist, wobei die Elastomerbuchse (7) im nicht eingebauten Zustand länger als die Distanzbuchse (1) und im
Einbauzustand, das Spiel in der Gelenkverbindung ausgleichend, auf deren (1) Länge zusammendrückbar ist.

2. Drehgelenk nach Anspruch 1,
dadurch gekennzeichnet,
daß beidseitig aus Elastomer bestehende Unterlagscheiben
auf die Elstomerbuchse (7) aufgeschoben sind.

3. Drehgelenk nach Anspruch 2 oder 3,
dadurch gekennzeichnet
daß die Elastomerbuchse (7) einen seitlichen scheibenförmigen Kragen (9) aufweist.

4. Drehgelenk nach einem der mehreren
der vorhergehenden Ansprüche,
dadurch gekennzeichnet,
daß die Distanzbuchse (1) einen seitlichen scheibenförmigen
Kragen (4) aufweist.

5. Drehgelenk nach Anspruch 4,
dadurch gekennzeichnet,
daß der zylindrische Buchsenteil (2) der Distanzbuchse (1)
über einen rampenförmigen Bund (3) in den scheibenförmigen
Kragen (4) übergeht.

6. Drehgelenk nach Anspruch 5,
dadurch gekennzeicnet,
daß der rampenförmige Bund (3) rund ausgekehlt ist.

7. Drehgelenk nach einem oder mehreren
der vorhergehenden Ansprüche,
dadurch gekennzeichnet,
daß die Elastomerbuchse (7) aus einem elastischen Kunststoff auf Polyurethanbasis besteht.

Fig. 2

Fig. 1

Fig. 3

0200793

Nummer der Anmeldung

Europäisches Patentamt

# EUROPÄISCHER RECHERCHENBERICHT

EP 85 10 4106

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | US-A-2 993 715 (P.C. HUTTON) * Spalte 2, Zeilen 8-56; Figuren 1-3,5 * | 1-3 | F 16 C 11/04 |
| X | US-A-2 787 486 (L.F. THIRY) * Spalte 5, Zeilen 43-74; Figuren 1,2 * | 1,3 | |
| A | DE-A-3 308 113 (A. BOCK) * Ansprüche 1-3; Figur 7 * | 1 | |
| | | | RECHERCHIERTE SACHGEBIETE (Int. Cl.4) |
| | | | F 16 C 11/00 |

Der vorliegende Recherchenbericht wurde für alle Patentansprüche erstellt.

| Recherchenort | Abschlußdatum der Recherche | Prüfer |
|---|---|---|
| BERLIN | 01-11-1985 | HOFFMANN M P |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82